# EUROPÄISCHE PATENTSCHRIFT

(11) **EP 0 784 930 B1**
(45) Veröffentlichungstag und Bekanntmachung des Hinweises auf die Patenterteilung: **17.05.2000**
(21) Anmeldenummer: 96114316.1
(22) Anmeldetag: 06.09.1996
(51) Int. Cl.: A01N 41/04, A01N 37/44, A01N 33/04

(54) **Desinfektionsmittelkonzentrat und Desinfektionsmittel auf Aminbasis und deren Verwendung**
Disinfectant concentrate and disinfectant based on amines and use thereof
Concentré désinfectant et agent désinfectant basé sur des aminés et leur usage

(30) Priorität: 12.09.1995 CH 257395
(43) Veröffentlichungstag der Anmeldung: 23.07.1997
(73) Patentinhaber: LONZA AG, CH-3945 Gampel/Wallis (CH)
(72) Erfinder: Ranft, Volker, 79730 Murg (DE); Lichtenberg, Florian, Dr., 79639 Grenzach (DE); Charcosset, Patrice, 92270 Bois Colombes (FR)
(74) Vertreter: Weinhold, Peter, Dr.

(56) Entgegenhaltungen:
- EP-A- 0 276 501
- EP-A- 0 343 605
- EP-A- 0 612 470
- DE-A- 1 916 254

## Beschreibung

Die vorliegende Erfindung betrifft ein Desinfektionsmittelkonzentrat auf Aminbasis, ein daraus erhältliches Desinfektionsmittel sowie dessen Verwendung.

Desinfektionsmittel werden zur Bekämpfung von Mikroorganismen aller Art in vielen Bereichen eingesetzt. Unter den Gebrauchseigenschaften von Desinfektionsmitteln sind ausser der Wirksamkeit, insbesondere gegen widerstandsfähige Krankheitserreger wie beispielsweise Mykobakterien, auch andere Eigenschaften wie beispielsweise die Verträglichkeit (bei Mitteln die mit dem menschlichen oder tierischen Körper in direkten Kontakt kommen, wie beispielsweise bei der Hände- oder Wunddesinfektion) und das Verhalten gegenüber Metallen, Kunststoffen und anderen Materialien von Bedeutung.

Aus EP-A 0 333 143, EP-A 0 343 605, EP-A 276 501 und EP-A 0 385 369 sind Reinigungs- und Desinfektionsmittel bekannt, die als bioziden Wirkstoff ein Alkylamin, insbesondere das *N,N*-Bis-(3-aminopropyl)laurylamin, enthalten. Diese Verbindung besitzt eine gute Wirksamkeit auch gegen problematische Mikroorganismen wie Tuberkuloseerreger. Aus EP-A 0 612 470 sind weiterhin Desinfektionsmittel auf Basis von Alkylaminen und aliphatischen Glykolethern bekannt. Ein Nachteil dieser bekannten Desinfektionsmittel auf Aminbasis ist der hohe pH-Wert insbesondere der Konzentrate, der sowohl zu Korrosionsproblemen bei empfindlichen Materialien als auch zu einer Gefährdung durch die Ätzwirkung beim unvorsichtigen Umgang mit dem Konzentrat führen kann. Ein an sich naheliegender Ausweg wäre ein Zusatz von Säure zur Neutralisation des Amins. Es hat sich jedoch herausgestellt, dass bei neutralem oder schwach saurem pH die Wirksamkeit dieser Desinfektionsmittel drastisch abnimmt oder, insbesondere in Gegenwart von organischen Verschmutzungen wie beispielsweise Eiweiss, Ausfällungen gebildet werden können.

Aufgabe der vorliegenden Erfindung war daher, Desinfektionsmittel auf Aminbasis bereitzustellen, welche auch im schwach alkalischen bis schwach sauren Bereich gute Wirksamkeit aufweisen und nicht zu Ausfällungen neigen.

Erfindungsgemäss wird diese Aufgabe durch das Desinfektionsmittelkonzentrat nach Patentanspruch 1 und das Desinfektionsmittel nach Patentanspruch 10 gelöst.

Es wurde überraschend gefunden, dass durch Zugabe von aromatischen Sulfonsäuren zu an sich bekannten Desinfektionsmittelzusammensetzungen auf Aminbasis deren Wirksamkeit bis in den schwach sauren Bereich ausgedehnt und gleichzeitig die Bildung von Niederschlägen verhindert werden kann.

Die erfindungsgemässen Desinfektionsmittelkonzentrate enthalten mindestens ein Alkylamin der allgemeinen Formel 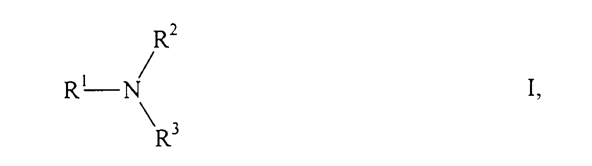 worin R¹ eine lineare oder verzweigte C₆-C₁₈-Alkylgruppe ist, R² eine Aminoalkylgruppe der Formel -(CH₂)ₘ-NH₂ ist und R³ Wasserstoff, eine Aminoalkylgruppe der Formel-(CH₂)ₙ-NH₂ oder eine Carboxyalkylgruppe der Formel -(CH₂)ₚ-COOH ist, wobei n und m unabhängig voneinander Zahlen von 2 bis 6 sind und p eine Zahl von 1 bis 5 ist, oder ein Salz eines solchen Alkylamins, sowie mindestens eine aromatische Sulfonsäure oder ein Salz einer aromatischen Sulfonsäure. Als Salze des Alkylamine, die allein oder im Gemisch mit der freien Base vorliegen können, kommen solche mit anorganischen oder organischen Säuren in Frage, falls R³ eine Carboxyalkylgruppe ist,auch innere Salze. Insbesondere kann das Alkylamin ganz oder teilweise mit der erfindungsgemäss zugesetzten aromatischen Sulfonsäure ein Salz bilden. Die Sulfonsäure kann gegebenenfalls auch als Salz mit einem Metall, insbesondere mit einem Alkali- oder Erdalkalimetall, vorliegen.

Als aromatische Sulfonsäure wird eine Benzolsulfonsäure der allgemeinen Formel 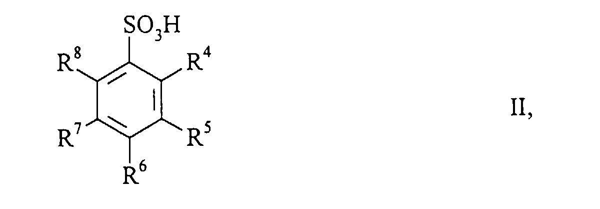 worin R⁴ bis R⁸ unabhängig voneinander Wasserstoff, C₁-C₄-Alkoxy, C₁-C₄-Alkyl, Amino, Mono- oder Di(C₁-C₄-alkyl)amino, Halogen oder Hydroxy sind, eingesetzt. Unter C₁-C₄-Alkoxy und C₁-C₄-Alkyl sind hierbei nicht nur die primären und linearen Gruppen wie beispielweise *n*-Butyl, sondern alle möglichen Isomeren zu verstehen. Wenigstens eine der Gruppen R⁴ bis R⁸ ist eine (primäre) Aminogruppe.

Ganz besonders bevorzugt sind die Benzolsulfonsäuren, in denen genau eine der Gruppen R⁴ bis R⁸ eine Aminogruppe ist und die übrigen Wasserstoffe sind, also die *o*-, *m*- und *p*-Aminobenzolsulfonsäuren (Orthanilsäure, Metanilsäure und Sulfanilsäure) und hierunter insbesondere die Orthanilsäure.

Unter den Alkylaminen (I) sind diejenigen bevorzugt, bei denen m = 3 ist und die beiden Reste R² und R³ gleich sind, also die *N,N*-Bis-(3-aminopropyl)alkylamine.

Ebenfalls bevorzugt sind Alkylamine, bei denen R¹ eine Dodecyl- (Lauryl-) oder Cocosfettalkylgruppe ist. (Bei Alkylaminen mit Cocosfettalkylgruppe handelt es sich um Gemische homologer Verbindungen, in denen R¹ im wesentlichen 10, 12 oder 14 Kohlenstoffatome enthält, wobei das Mengenverhältnis demjenigen der Fettsäuren entsprechender Kettenlänge im Cocosfett entspricht.)

Besonders bevorzugt ist das *N,N*-Bis-(3-aminopropyl)laurylamin (R¹ = *n*-C₁₂H₂₅, R² = R³ = -(CH₂)₃-NH₂).

Das erfindungsgemässe Desinfektionsmittelkonzentrat enthält vorzugsweise zusätzlich zu der Sulfonsäure noch wenigstens eine weitere anorganische oder organische Säure. Diese Säure dient im wesentlichen der (weiteren) Erniedrigung des pH-Wertes.

Besonders bevorzugt sind organische Säuren, insbesondere kurzkettige Carbonsäuren wie beipielsweise Ameisensäure oder Essigsäure oder Verbindungen wie Ethylendiamintetraessigsäure oder Nitrilotriessigsäure, wobei die letztgenannten zugleich als Komplexbildner wirksam sind.

Vorzugsweise besitzt das Desinfektionsmittelkonzentrat einen pH-Wert von 5 bis 9,5.

Das erfindungsgemässe Desinfektionsmittelkonzentrat kann ausserdem für Desinfektionsmittel übliche Zusatzstoffe enthalten. Hierzu zählen neben dem Lösungsmittel (Wasser) insbesondere Lösungsvermittler wie niedrige Alkohole oder andere organische Lösungsmittel, Korrosionsschutzmittel, Komplexbildner, Puffer, Entschäumer, Stabilisatoren, Parfüme und/oder Farbstoffe.

Desgleichen kann das Desinfektionsmittelkonzentrat auch oberflächenaktive Substanzen wie nichtionische oder kationische Tenside enthalten.

Die Wirkstoffkonzentration im Desinfektionsmittelkonzentrat ist vorzugsweise 2-60 Gew.% für die Alkylaminkomponente und 2-20 Gew.% für die Sulfonsäurekomponente. Besonders bevorzugt sind Konzentrationen von 5-40 Gew.% Alkylaminkomponente und 2-10 Gew.% Sulfonsäurekomponente.

Das gebrauchsfertige Desinfektionsmittel (Gebrauchslösung) wird zweckmässig durch Verdünnung des Konzentrats mit Wasser hergestellt.

Die gebrauchsfertige Desinfektionsmittellösung enthält vorzugsweise 0,005-0,1 Gew.% der Alkylaminkomponente und 0,002-0,1 Gew.% der Sulfonsäurekomponente.

Der pH-Wert der gebrauchsfertigen Desinfektionsmittellösung beträgt vorzugsweise 6 bis 9. Das erfindungsgemässe Desinfektionsmittelkonzentrat bzw. die erfindungsgemässe Desinfektionsmittellösung eignen sich aufgrund ihres breiten Wirkungsspektrums als Bakterizid, insbesondere als Mykobakterizid, sowie als Fungizid und Viruzid. Sie zeigen insbesondere eine gute Wirksamkeit gegen grampositive und gramnegative Bakterien, gegen Pilze wie beispielsweise *Absidia,* sowie gegen Viren wie beispielsweise den Erreger von Hepatitis B.

Bevorzugte Anwendungsgebiete sind die Flächendesinfektion und die Verwendung in chemischen Toiletten.

Die Erfindung wird durch die nachfolgenden Beispiele näher erläutert, ohne dass darin eine Einschränkung zu sehen ist.

### Beispiel 1

### Herstellung eines Desinfektionsmittelkonzentrats (erfindungsgemäss)

Es wurde eine wässrige Lösung (Formulierung A) hergestellt, die folgende Wirkstoffe und Zusätze enthielt:

| | |
|---|---|
| *N,N*-Bis-(3-aminopropyl)laurylamin (=LONZABAC® 12) | 20 g |
| *o*-Aminobenzolsulfonsäure (Orthanilsäure) | 5 g |
| Essigsäure | 6 g |
| Trinatriumcitrat-Dihydrat | 2 g |
| Ethylendiamintetraessigsäure, Tetranatriumsalz (EDTANa₄) | 1,6 g (berechnet als wasserfreie Substanz) |
| Wasser | ad 100 g |

### Beispiel 2

### Herstellung eines Desinfektionsmittelkonzentrats (Vergleichsbeispiel)

Es wurde eine wässrige Lösung wie in Beispiel 1 hergestellt, jedoch *ohne o*-Aminobenzolsulfonsäure (Formulierung B).

### Beispiel 3

### Quantitativer Suspensionstest nach den Testbedingungen der französischen Norm AFNOR 72-151 (Ausgabe November 1987)

Es wurde für die Desinfektionsmittelkonzentrate nach Beispielen 1 und 2 (Formulierungen A und B) sowie wässrige Lösungen der Einzelkomponenten mit vier Arten von Mikroorganismen diejenige Verdünnung (in destilliertem Wasser) bestimmt, in der nach einer Kontaktdauer von 5 min eine Reduktion der Zahl der Testkeime um einen Faktor 10⁵ eintrat. Die Konzentration der einzelnen gelösten Komponenten (soweit vorhanden) ist dabei für alle Stammlösungen gleich (siehe Beispiel 1). Die in der Tabelle angegebenen Werte entsprechen jeweils der Verdünnung der Stammlösung in Volumenprozent, sie geben also nicht die absolute Konzentration an. Die Werte für Orthanilsäure allein wurden in Gegenwart der zehnfachen Menge eines nichtionischen Tensids (Genapol® UD 80) als Lösungsvermittler bestimmt. Als Testkeime wurden benutzt: *Pseudomonas aeruginosa, Staphylococcus aureus, Escherichia coli* und *Enterococcus faecium.*

Die Resultate sind in der folgenden Tabelle 1 zusammengefasst.

Es zeigt sich, dass die erfindungsgemässe Zusammensetzung (Formulierung A) gegen drei der vier Testkeime eine bessere Wirksamkeit als das Amin allein und gegen alle Testkeime eine bessere Wirksamkeit als die Vergleichszusammensetzung ohne Sulfonsäure aufweist. Die Sulfonsäure allein sowie die übrigen Bestandteile (Zusatzstoffe) sind dagegen praktisch wirkungslos.

### Beispiel 4

### Quantitativer Suspensionstest nach den Testbedingungen der französischen Norm AFNOR 72-171 (November 1988) mit Zusatz von 1% Albumin in Wasser mit 30 °fH

Die Versuchsdurchführung entspricht mit Ausnahme der Eiweissbelastung und der Verwendung von hartem Wasser derjenigen in Beispiel 3.

Die Resultate sind in der folgenden Tabelle 2 zusammengefasst.

Es zeigt sich, dass das Amin allein unter diesen Bedingungen nicht einsetzbar ist, weil das vorhandene Eiweiss ausgefällt wird. Die erfindungsgemässe Zusammensetzung (Formulierung A) weist gegen alle vier Testkeime eine deutlich bessere Wirksamkeit als die Vergleichszusammensetzung ohne Sulfonsäure auf.

### Beispiel 5

### Bestimmung der fungiziden Wirkung nach den Testbedingungen der französischen Norm AFNOR 72-201 (September 1987)

Es wurde für die Desinfektionsmittelkonzentrate nach Beispielen 1 und 2 (Formulierungen A und B) sowie wässrige Lösungen der Einzelkomponenten mit zwei Arten von Mikroorganismen diejenige Verdünnung (in destilliertem Wasser) bestimmt, in der nach einer Kontaktdauer von 5 min eine Reduktion der Zahl der Testkeime um einen Faktor 10⁵ eintrat. Die Art der Darstellung der Resultate entspricht derjenigen in Beispiel 3.

Als Testkeime wurden *Candida albicans* und *Absidia corymbifera* eingesetzt.

Die Ergebnisse sind in der folgenden Tabelle 3 zusammengefasst.

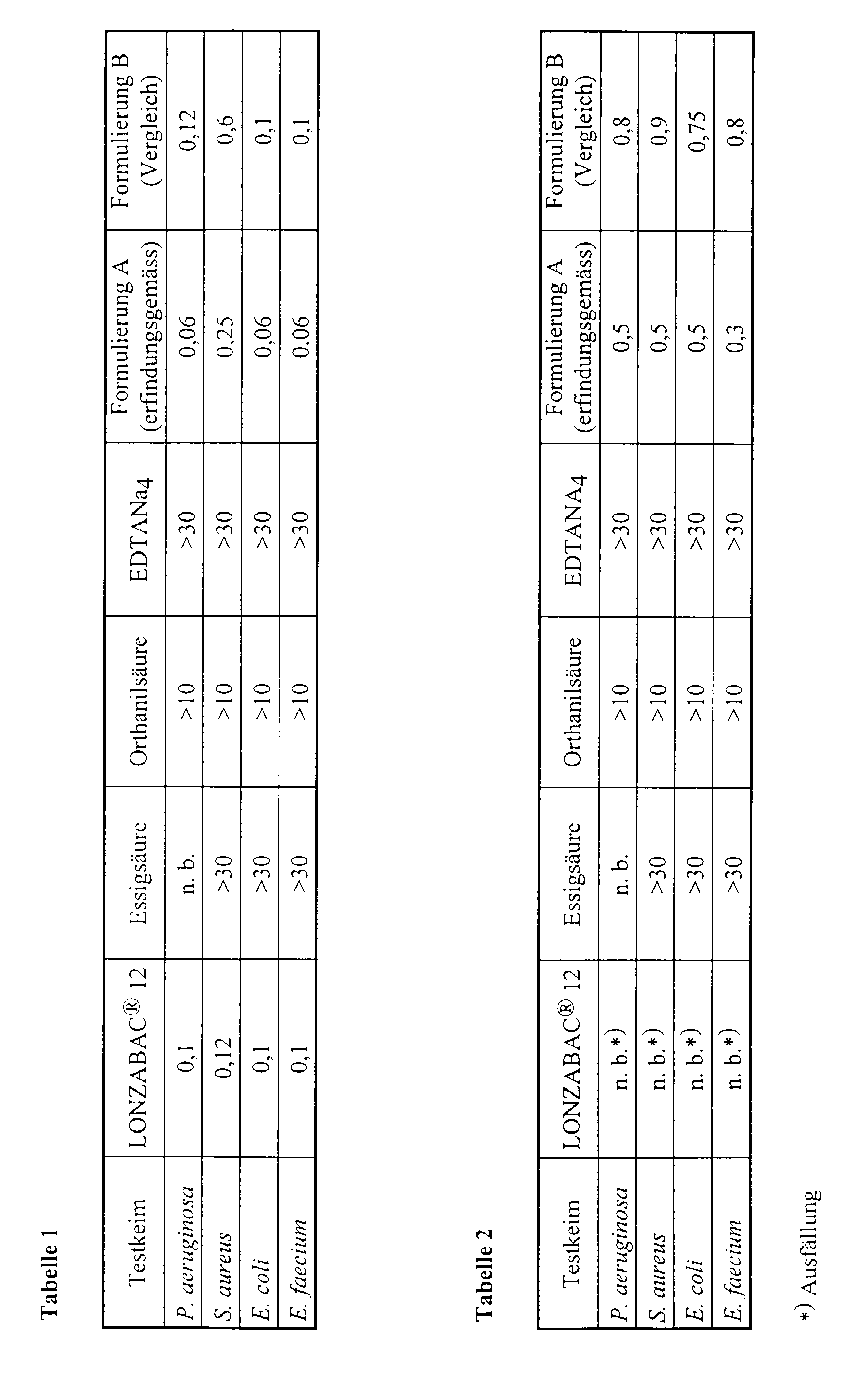

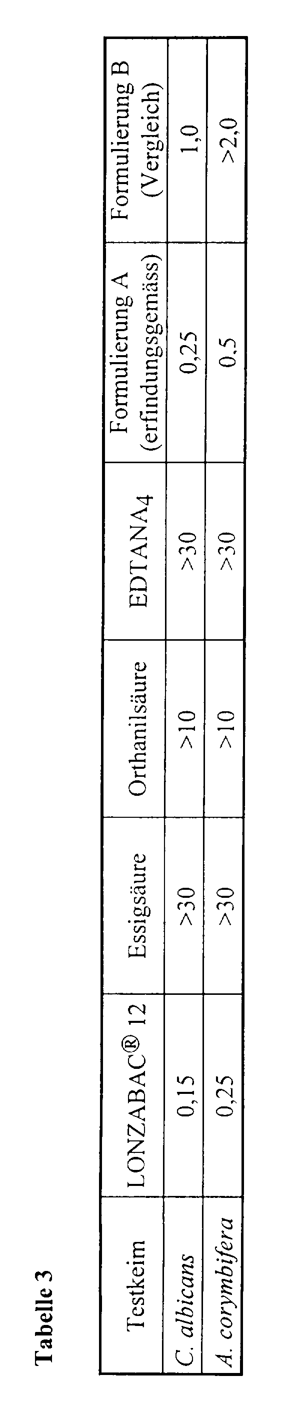

## Patentansprüche

1. Desinfektionsmittelkonzentrat auf Aminbasis, dadurch gekennzeichnet, dass es mindestens ein Alkylamin der allgemeinen Formel 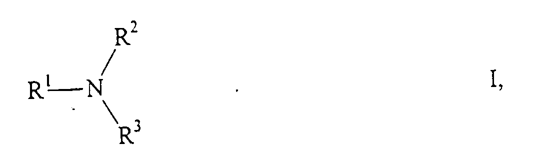 worin R¹ eine lineare oder verzweigte C₆-C₁₈-Alkylgruppe ist, R² eine Aminoalkylgruppe der Formel -(CH₂)ₘ-NH₂ ist und R³ Wasserstoff, eine Aminoalkylgruppe der Formel -(CH₂)ₙ-NH₂ oder eine Carboxyalkylgruppe der Formel -(CH₂)ₚ-COOH ist, wobei n und m unabhängig voneinander Zahlen von 2 bis 6 sind und p eine Zahl von 1 bis 5 ist, oder ein Salz eines solchen Alkylamins, sowie mindestens eine aromatische Sulfonsäure der allgemeinen Formel 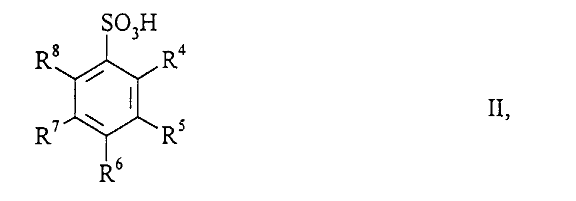 worin R⁴ bis R⁸ unabhängig voneinander Wasserstoff, C₁-C₄-Alkoxy, C₁-C₄-Alkyl, Amino, Mono- oder Di(C₁-C₄-alkyl)amino, Halogen oder Hydroxy sind, wobei wenigstens eine der Gruppen R⁴ bis R⁸ eine Aminogruppe ist, oder ein Salz einer solchen aromatischen Sulfonsäure, enthält.

2. Desinfektionsmittelkonzentrat nach Anspruch 1, dadurch gekennzeichnet, dass eine der Gruppen R⁴ bis R⁸ eine Aminogruppe ist und die übrigen Wasserstoffe sind.

3. Desinfektionsmittelkonzentrat nach einem der Ansprüche 1 oder 2, dadurch gekennzeichnet, dass m = 3 und R³ = R² ist.

4. Desinfektionsmittelkonzentrat nach einem der Ansprüche 1 bis 3, dadurch gekennzeichnet, dass R¹ eine Dodecyl- oder Cocosfettalkylgruppe ist.

5. Desinfektionsmittelkonzentrat nach einem der Ansprüche 1 bis 4, dadurch gekennzeichnet, dass es zusätzlich wenigstens eine anorganische oder organische Säure enthält.

6. Desinfektionsmittelkonzentrat nach einem der Ansprüche 1 bis 5, dadurch gekennzeichnet, dass es einen pH-Wert von 5 bis 9,5 aufweist.

7. Desinfektionsmittelkonzentrat nach einem der Ansprüche 1 bis 6, dadurch gekennzeichnet, dass es ausserdem übliche Zusatzstoffe wie Lösungsmittel, Lösungsvermittler, Korrosionsschutzmittel, Komplexbildner, Puffer, Entschäumer, Stabilisatoren, Parfüm und/oder Farbstoffe enthält.

8. Desinfektionsmittelkonzentrat nach einem der Ansprüche 1 bis 7, dadurch gekennzeichnet, dass es ausserdem wenigstens ein Tensid enthält.

9. Desinfektionsmittelkonzentrat nach einem der Ansprüche 1 bis 8, dadurch gekennzeichnet, dass es die Alkylaminkomponente in einer Konzentration von 2-60 Gew.% und die Sulfonsäurekomponente in einer Konzentration von 2-20 Gew.% enthält.

10. Desinfektionsmittel, dadurch gekennzeichnet, dass es eine wässrige Verdünnung des Desinfektionsmittelkonzentrats gemäss einem der Ansprüche 1 bis 9 ist.

11. Desinfektionsmittel nach Anspruch 10, dadurch gekennzeichnet, dass es 0,005-0,1 Gew.% der Alkylaminkomponente und 0,002-0,1 Gew.% der Sulfonsäurekomponente enthält.

12. Desinfektionsmittel nach Anspruch 10 oder 11, dadurch gekennzeichnet, dass es einen pH-Wert von 6 bis 9 aufweist.

13. Verwendung des Desinfektionsmittelkonzentrats gemäss einem der Ansprüche 1 bis 9 oder des Desinfektionsmittels gemäss einem der Ansprüche 10 bis 12 als Bakterizid, Mykobakterizid, Fungizid und/oder Viruzid.

14. Verwendung nach Anspruch 13 zur Flächendesinfektion und in chemischen Toiletten.

## Claims

1. Disinfectant concentrate based on amines, characterised by containing at least one alkylamine having the general formula 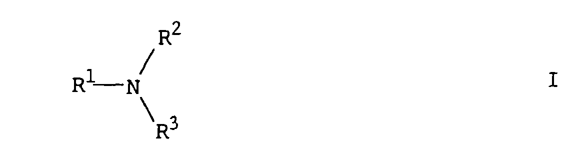 wherein R¹ is a linear or branched C₆ to C₁₈ alkyl group, R² is an aminoalkyl group having the formula -(CH₂)ₘ-NH₂, and R³ is hydrogen, an aminoalkyl group having the formula -(CH₂)ₙ-NH₂ or a carboxyalkyl group having the formula -(CH₂)ₚ-COOH, with n and m independently being numbers from 2 to 6 and p being a number from 1 to 5, or a salt of such an alkylamine, and at least one aromatic sulfonic acid having the general formula 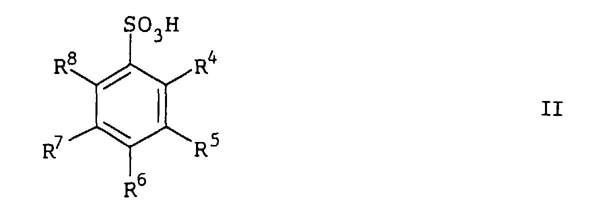 wherein R⁴ to R⁸ independently are hydrogen, C₁ to C₄ alkoxy, C₁ to C₄ alkyl, amino, mono- or di(C₁ to C₄ alkyl)amino, halogen or hydroxy, with at least one of said groups R⁴ to R⁸ being an amino group, or a salt of such an aromatic sulfonic acid.

2. Disinfectant concentrate according to claim 1, characterised in that one of said groups R⁴ to R⁸ is an amino group and the other groups are hydrogen.

3. Disinfectant concentrate according to any one of claims 1 or 2, characterised in that m = 3 and R³ = R².

4. Disinfectant concentrate according to any one of claims 1 to 3, characterised in that R¹ is a dodecyl or coconut fatty alkyl group.

5. Disinfectant concentrate according to any one of claims 1 to 4, characterised by additionally containing at least one inorganic or organic acid.

6. Disinfectant concentrate according to any one of claims 1 to 5, characterised by having a pH of from 5 to 9.5.

7. Disinfectant concentrate according to any one of claims 1 to 6, characterised by moreover containing customary additives such as solvents, solubility promoters, corrosion-protection agents, complexing agents, buffers, defoaming agents, stabilisers, perfumes and/or colorants.

8. Disinfectant concentrate according to any one of claims 1 to 7, characterised by moreover containing at least one surfactant.

9. Disinfectant concentrate according to any one of claims 1 to 8, characterised by containing said alkylamine component in a concentration of 2 - 60% (wt.) and said sulfonic acid component in a concentration of 2 - 20% (wt.).

10. Disinfectant, characterised in that it is an aqueous dilution of the disinfectant concentrate according to any one of claims 1 to 9.

11. Disinfectant according to claim 10, characterised by containing 0.005 - 0.1% (wt.) of said alkylamine component and 0.002 - 0.1% (wt.) of said sulfonic acid component.

12. Disinfectant according to claim 10 or 11, characterised by having a pH of from 6 to 9.

13. Use of the disinfectant concentrate according to any one of claims 1 to 9 or of the disinfectant according to any one of claims 10 to 12 as a bactericide, mycobactericide, fungicide and/or virucide.

14. Use according to claim 13 for disinfection of surfaces and in chemical toilets.

## Revendications

1. Concentré de désinfectant à base d'amine, caractérisé en ce qu'il contient au moins une alkylamine de formule générale 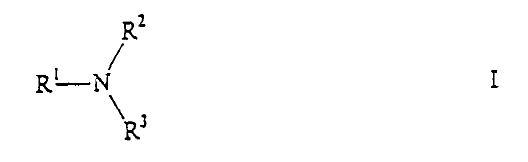 où R¹ est un groupe alkyle en C₆-C₁₈ linéaire ou ramifié, R² est un groupe aminoalkyle de formule -(CH₂)ₘ-NH₂ et R³ est l'hydrogène, un groupe aminoalkyle de formule -(CH₂)ₙ-NH₂ ou un groupe carboxyalkyle de formule -(CH₂)ₚ-COOH, où n et m sont indépendamment l'un de l'autre des nombres de 2 à 6 et p est un nombre de 1 à 5, ou un sel d'une telle alkylamine, ainsi qu'au moins un acide sulfonique aromatique de formule générale 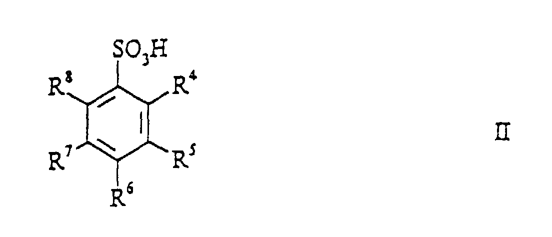 où R⁴ à R⁸ sont indépendamment les uns des autres l'hydrogène, alcoxy en C₁-C₄, alkyle en C₁-C₄, amino, mono- ou di(alkyle en C₁-C₄)amino, halogène ou hydroxyle, où au moins l'un des groupes R⁴ à R⁸ est un groupe amino, ou un sel d'un tel acide sulfonique aromatique.

2. Concentré de désinfectant selon la revendication 1 caractérisé en ce que l'un des groupes R⁴ à R⁸ est un groupe amino et les autres sont des hydrogènes.

3. Concentré de désinfectant selon l'une des revendications 1 et 2 caractérisé en ce que m = 3 et R³ = R².

4. Concentré de désinfectant selon l'une des revendications 1 à 3 caractérisé en ce que R¹ est un groupe dodécyle ou alkyle de graisse de coprah.

5. Concentré de désinfectant selon l'une des revendications 1 à 4 caractérisé en ce qu'il contient en outre au moins un acide inorganique ou organique.

6. Concentré de désinfectant selon l'une des revendications 1 à 5 caractérisé en ce qu'il présente un pH de 5 à 9,5.

7. Concentré de désinfectant selon l'une des revendications 1 à 6 caractérisé en ce qu'il contient en outre des additifs courants comme des solvants, des promoteurs de dissolution, des agents anticorrosion, des complexants, des tampons, des agents antimousse, des stabilisants, des parfums et/ou des colorants.

8. Concentré de désinfectant selon l'une des revendications 1 à 7 caractérisé en ce qu'il contient en outre au moins un tensioactif.

9. Concentré de désinfectant selon l'une des revendications 1 à 8 caractérisé en ce qu'il contient le composant alkylamine en une concentration de 2-60% en masse et le composant acides sulfonique en une concentration de 2-20% en masse.

10. Désinfectant caractérisé en ce qu'il s'agit d'une dilution aqueuse du concentré de désinfectant selon l'une des revendications 1 à 9.

11. Désinfectant selon la revendication 10 caractérisé en ce qu'il contient 0,005-0,1% en masse de composant alkylamine et 0,002-0,1% en masse de composant acide sulfonique.

12. Désinfectant selon la revendication 10 ou 11 caractérisé en ce qu'il présente un pH de 6 à 9.

13. Utilisation du concentré de désinfectant selon l'une des revendications 1 à 9 ou du désinfectant selon l'une des revendications 10 à 12 comme bactéricide, mycobactéricide, fongicide et/ou virucide.

14. Utilisation selon la revendication 13 pour la désinfection des surfaces et dans les toilettes chimiques.
